# FASCICULE DE BREVET EUROPEEN

(11) **EP 0 821 190 B1**
(45) Date de publication et mention de la délivrance du brevet: **01.10.2003**
(21) Numéro de dépôt: 97401578.6
(22) Date de dépôt: 03.07.1997
(51) Int. Cl.: F16J 15/08, F16K 1/226

(54) **Joint d'étanchéité en métal, notamment pour un dispositif de robinetterie**
Metalldichtung, insbesondere für Armaturvorrichtung
Metal seal, in particular for fitting device

(30) Priorité: 25.07.1996 FR 9609378
(43) Date de publication de la demande: 28.01.1998
(73) Titulaire: KSB S.A.S, 92230 Gennevilliers (FR)
(72) Inventeur: Peterschmitt, Jacques, 33140 Villenave D'Ornon (FR); Laulhe, René, 331400Villenave D'Ornon (FR); Wattignier, Claude, 33400 Talence (FR)
(74) Mandataire: Eidelsberg, Victor Albert

(56) Documents cités:
- EP-A- 0 085 555
- FR-A- 2 429 946
- US-A- 4 231 546

## Description

### Domaine technique

L'invention concerne un joint d'étanchéité pour assurer, d'une part, une étanchéité statique, et, d'autre part, une étanchéité dynamique. Le joint est notamment destiné à assurer l'étanchéité amont/aval d'un robinet à papillon avec un obturateur pour des conditions de service de hautes pressions et/ou températures. Pour ces applications, on utilise des joints d'étanchéité en métal assurant, côté corps, une étanchéité statique et, côté obturateur, une étanchéité dynamique ou l'inverse.

### Etat de la technique

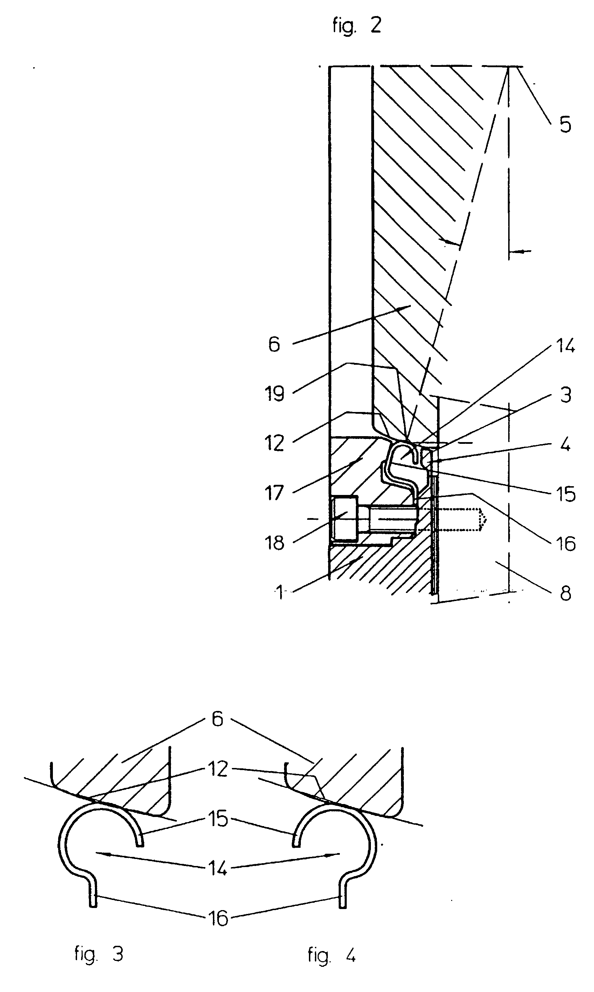

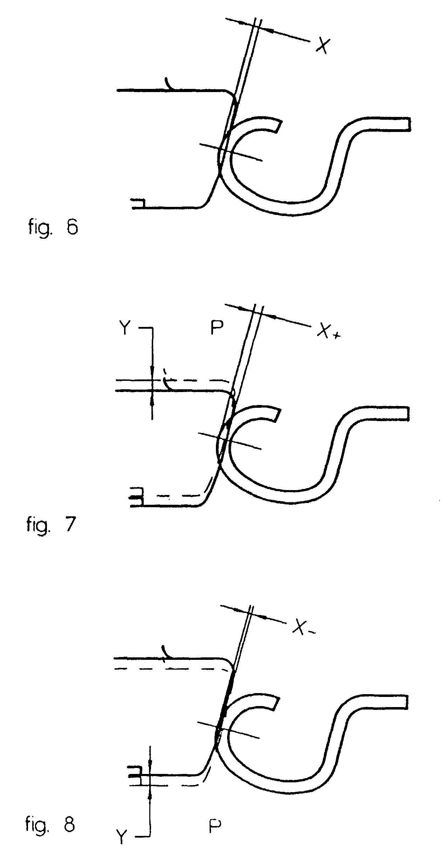

Le document FR-B1-2 566 870 contient plusieurs types de joints d'étanchéité destinés à assurer une étanchéité entre un obturateur et un corps. On y propose dans la fig. 6 des joints usinés d'une seule pièce ou l'étanchéité dynamique est réalisée par l'appui d'une partie chanfreinée contre l'obturateur. Les fig. 2 et 4 montrent des joints en tôle avec des anneaux de réaction solides et relativement rigides. Le joint d'étanchéité en tôle assure l'étanchéité dynamique par un anneau en métal mis en forme pour créer des contraintes de contact suffisamment importantes pour résister aux hautes pressions. L'étanchéité statique est réalisée par compression d'un tore élastique en appui sur une des parties planes du joint d'étanchéité.

Les joints d'étanchéité utilisent le concept d'autocentrage sur l'obturateur de façon à conserver les contraintes d'étanchéité lors de la mise sous pression et pendant la fermeture de l'obturateur. La flexibilité radiale du joint usiné est obtenue par plusieurs rainures circonférentielles usinées. Le joint en tôle comporte une plage de liaison conique entre la partie mise en forme de l'anneau et le talon.

Cependant, ces joints sont relativement complexes et donc coûteux dans leur fabrication.

Dans le document DE-C2-26 44 518 est décrit un joint d'étanchéité en métal en une seule pièce. Le joint dispose d'une section en forme de crochet, c'est-à-dire un talon pour assurer l'étanchéité statique, une entretoise et une partie d'arc en cercle. L'entretoise peut être réalisée en forme conique ou droite et est destinée à assurer une flexibilité axiale du joint permettant ainsi de suivre un déplacement axial de l'obturateur, c'est-à-dire le long de l'axe de la veine fluide.

Du DE-A-24 54 452 on connaît des joints d'étanchéité en élastomère ou en métal en forme de crochet. Les joints disposent, dans leur partie torique, d'une lèvre qui repose sur l'épaulement d'un logement pour limiter le déplacement radial du joint.

Ces joints présentent l'inconvénient de ne pas être comprimés uniformément dans le cas ou l'obturateur ne se trouve pas exactement centré sur la portée d'étanchéité dynamique du joint, c'est-à-dire où il y a un déplacement radial le long de l'axe de manoeuvre. Car le joint n'a pas la capacité d'autocentrage, l'étanchéité tout autour de l'obturateur n'est plus homogène.

Le but de l'invention est de trouver une solution simple pour réaliser un joint d'étanchéité avec une capacité d'autocentrage. Au FR-A-242 946, on décrit un joint d'étanchéité en métal conforme au préambule de la revendication 1.

### Exposé de l'invention

Le dispositif selon l'invention est défini à la revendication 1.

Grâce à l'invention, on est capable de maîtriser un autocentrage du joint, par exemple sur un sphérique d'obturateur par une souplesse radiale obtenue, d'une part, par un arc de caractéristiques appropriées (angle et un rayon), et, d'autre part, par la pression de contact de l'étanchéité dynamique obtenue par le choix d'un arc d'un angle et d'un rayon variable approprié.

A partir d'un paramétrage avec angle et rayon une grande variété de formes possibles peut être réalisée permettant d'optimiser en contrainte le joint pour les petits comme pour les grands diamètres.

Par rapport aux joints avec capacité d'autocentrage connus avec anneau de réaction, le nombre de pièces est réduit tout en assurant un même fonctionnement par la partie courbe toute seule. Les essais ont montrés que cette solution technique est applicable même à 50.10⁵Pa.

Dans un autre mode de réalisation la partie courbe du joint en place monté s'appuie contre une partie rigide d'un logement du joint.

Un autre mode de réalisation prévoit un segment droit reliant la partie courbe et le talon permettant ainsi l'adaptation de la solution à un encombrement disponible. Le segment droit fait un angle de moins de 135 degrés avec le talon. En même temps, la souplesse radiale et donc la capacité d'autocentrage peut variée davantage.

Un dispositif de robinetterie comportant un corps, un obturateur et un joint d'étanchéité pour assurer l'étanchéité amont/aval entre le corps et l'obturateur, comme par exemple un robinet à papillon, muni d'un tel joint d'étanchéité en métal a l'avantage d'avoir une étanchéité fiable même dans des conditions extrêmes de hautes températures et/ou pressions.

### Présentation des différentes figures

Les dessins annexés illustrent l'invention réalisée dans un robinet à papillon.
- La fig. 1: est une coupe axiale schématique d'un robinet à papillon pouvant être équipé d'un dispositif d'étanchéité selon l'invention.
- La fig. 2: représente en coupe une partie d'un robinet à papillon muni d'un joint selon l'invention.
- La fig. 3: représente en coupe un agrandissement de la région d'étanchéité dynamique et le joint monté en sens normal.
- La fig. 4: représente en coupe un agrandissement comme dans la fig. 3 le joint monté en sens inverse.
- La fig. 5: représente des modes de montage et de chargement du joint.

### Mode de réalisation

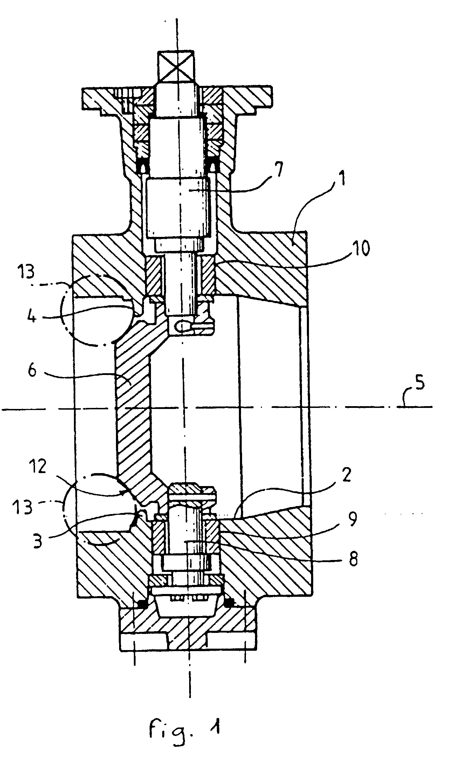

Avec référence à la figure 1, le robinet à papillon comprend d'une façon classique, d'une part, un corps 1 à veine fluide axiale 2 munie d'un épaulement d'alésage 3 qui présente un appui 4 situé dans un plan perpendiculaire à l'axe 5 de la veine fluide 2, et, d'autre part, un papillon 6 monté pivotant dans le corps 1 au moyen de deux axes respectifs 7, 8 passant au travers de perçages transversaux 9, 10 prévus dans le corps, et dont l'un (l'axe 7) sert à assurer l'entraînement du papillon 6.

Dans cet exemple, la surface d'étanchéité 12 du papillon 6 (qui consiste en sa tranche) présente une forme sphérique centrée sur l'axe principale de symétrie du papillon 6. Cette forme pourrait également être sphérique ou, d'une façon plus générale, conoïde de révolution, c'est-à-dire constituée par une courbe de révolution dont la génératrice est une courbe appropriée.

Il convient de noter qu'en position fermée du robinet la tranche 12 du papillon 6 vient se disposer sensiblement au droit de l'appui 4 de l'épaulement d'alésage 3 du corps 1.

Sur cette figure, le joint utilisé pour réaliser l'étanchéité amont/aval du robinet n'a pas été représenté. On a simplement représenté un cercle 13 correspondant aux différents détails de réalisation représentés sur les figures 2 à 6.

Comme précédemment mentionné et représenté dans la fig. 2, l'étanchéité amont/aval est assurée par un joint d'étanchéité 14 d'une section comportant une partie courbe 15 d'étanchéité dynamique et un talon 16 en forme de couronne présentant une partie plane radiale, destinée à être serrée contre l'appui 4 de l'épaulement d'alésage 3 du corps 1 en vue de réaliser l'étanchéité statique. La section du joint 14 se présente dans son ensemble sous forme de crochet. Le point de contact 19 entre le joint 14 et la surface d'étanchéité 12 du papillon 6, le robinet étant fermé, est située sur la partie courbe 15 et présente un angle ϕ par rapport à l'axe de manoeuvre 8 constituant un côté de l'angle α. Le deuxième côté de l'angle α coupe l'axe de manoeuvre 8 à l'endroit où les axes 5 et 8 se coupent et correspond à la normale de la surface d'étanchéité au moins de contact 19. Le point d'intersection des deux axes 5, 8 est donc l'origine de l'angle ϕ.

Il convient de noter à ce sujet que dans les modes de réalisation représentés sur les figures suivantes, ce serrage du talon 16 est assuré au moyen d'une bride circulaire 17 serrée par des vis 18 sur le corps 1.

La force de contact exercée du papillon 6 sur le joint 14 provoque une déformation du joint 14. Sous l'influence de cette déformation, la partie courbe 15 peut s'appuyer contre la bride 17 ou plus généralement contre un appui de son logement. Le point 23 est le point de contact possible de la partie courbe 15 du joint 14 avec la bride 17.

De même, la partie courbe 15 du joint 14 peut être pressée contre l'appui 4 du corps 1 si les conditions de manoeuvre et de pression provoquent un déplacement dans ce sens, ce qui est également le cas pour le montage du joint en sens inverse.

Dans la fig. 3, le joint 1 est monté en sens normal en référence à la surface d'étanchéité 12 du papillon 6, alors que dans la fig. 4 le joint est monté en sens inverse. La surface d'étanchéité 12 vient en contact avec le joint 1 du côté ouvert (sens normal) ou du côté fermé du joint (sens inversé).

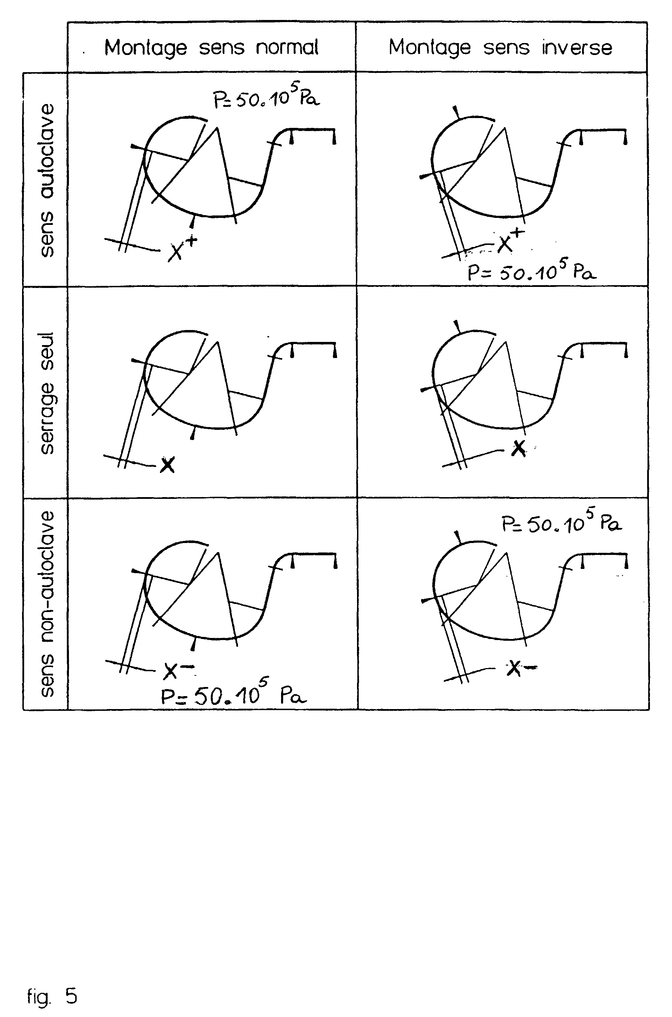

Dans la fig. 5, on reconnaît, sous forme schématique, les trois configurations de sollicitations du siège du joint et deux sens possibles de montage.

En principe, le joint peut avoir jusqu'à quatre portées, représentées dans le schéma par des points d'appui. Deux points d'appui indiquent l'encastrement du talon entre la bride et le corps comme palier fixe, un troisième point d'appui indique, comme palier libre, le point d'appui de la partie courbe au logement du joint. La position de ce point d'appui varie selon le principe de montage. Le point de contact du joint avec la surface d'étanchéité de l'obturateur est indiqué par le dernier point d'appui.

Les fig. 6 à 8 montrent la différence de sollicitation au niveau du contact joint-obturateur selon le type de chargement pour un joint monté en sens normal.

Le chargement serrage seul (obturateur fermé sans pression) représenté dans la fig. 6 correspond à la fermeture du robinet sans aucune pression supplémentaire. Le joint est soumis à un serrage de valeur X en raison de la pénétration de l'obturateur, ce qui crée une contrainte de déformation. La déformation du joint se fait sur sa partie libre, c'est-à-dire sur sa partie courbe, car le talon fonctionne comme palier fixe.

Le chargement autoclave représenté dans la fig. 7 correspond à la mise sous pression P du robinet de 50.10⁵ Pa du côté ouvert de la partie courbe du joint. En raison de la pression appliquée d'un côté et des jeux de fabrication, l'obturateur se déplace d'une distance y pénétrant ainsi davantage dans le joint. Ce déplacement de l'obturateur fait que la partie courbe est comprimée encore plus d'une distance X⁺, ce qui augmente la contrainte de déformation. La pression de contact augmente et la pression d'étanchéité croît également.

Le chargement non-autoclave représenté dans la fig. 8 correspond à la mise sous pression du robinet du côté fermé de la partie courbe 15 du joint. Comme indiqué par la représentation en traits pointillés, l'obturateur se déplace d'une distance Y et comprime le joint d'une valeur X⁻. Ce déplacement se traduit en une diminution de la force de serrage.

Le dimensionnement du joint doit tenir compte de ces effets pour assurer une étanchéité fiable quel que soit le sens de montage en évitant en même temps une déformation plastique non réversible du joint.

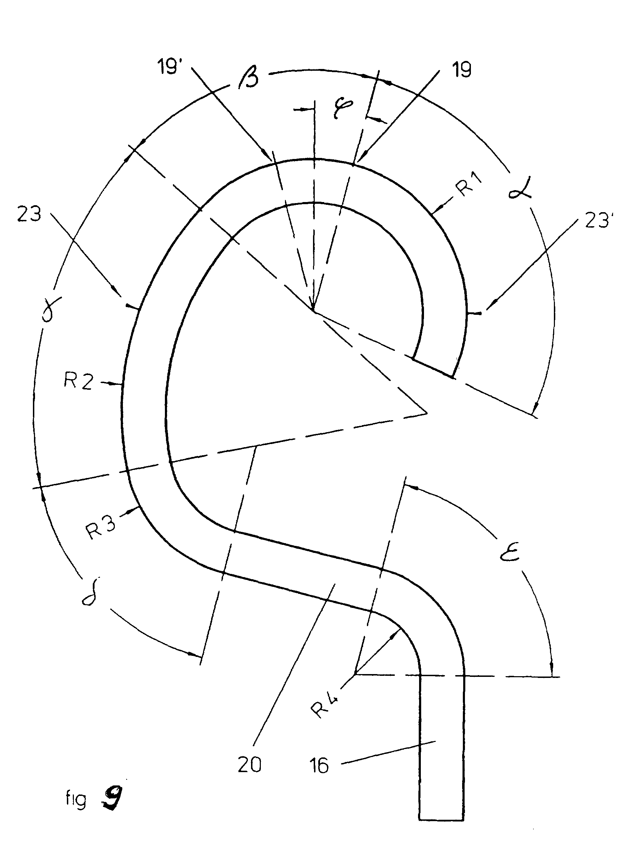

La fig. 9 représente le joint d'étanchéité en détail.

Ce joint dispose d'une partie courbe en trois arcs de cercle α + β, γ, δ avec au moins deux rayons différents parmi R₁, R₂, R₃. La liaison entre la partie courbe et le talon 16 se fait par un arc de cercle ε de rayon R₄. La partie courbe dispose d'un segment droit 20 d'une longueur appropriée aux conditions de la place disponible dans le logement du joint. Cette longueur peut devenir zéro pour certains choix des rayons R₁, R₂, R₃.

Le point d'appui contre le logement dans le cas d'un montage en sens normal 23 se trouve sur l'arc γ de rayon R₂, indiqué par l'appui.

C'est sur l'arc de cerclé α + β de rayon R₁ que le point de contact papillon-siège 19 est placé. En montage sens normal, il est à une distance angulaire α de l'extrémité du joint et à une distance angulaire ϕ d'un axe perpendiculaire à l'axe central passant par le centre de l'arc de cercle α + β. Cet angle ϕ correspond à l'angle ϕ de la fig. 2. L'arc de cercle α + β de rayon R₁ est composé des deux angles α et β définis par rapport à l'angle ϕ.

Le point de contact dans le cas d'un montage en sens inverse 19' se situe dans l'arc β à 2 ϕ de l'arc α. En ce cas, le point d'appui 23' contre le logement est situé dans l'arc α près de l'extrémité du joint.

La réalisation du joint en tôle est possible par emboutissage, fluotourage ou repoussage grâce à l'épaisseur constante et la forme ouverte de la section.

### Application industrielle

Le joint d'étanchéité, selon l'invention, peut être utilisé pour une étanchéité statique et une étanchéité dynamique dans la robinetterie et autres, par exemple pour rendre étanche l'obturateur d'un dispositif de robinetterie comportant un obturateur à rotation quart de tour.

## Revendications

1. Dispositif de robinetterie comprenant un corps (1), un appui (4) fixé au corps (1), un élément (17) d'étanchéité et un joint d'étanchéité en métal pour assurer l'étanchéité amont et aval entre le corps (1 ) et l'élément (17) d'étanchéité, le joint d'étanchéité en métal ayant un talon (16) serré entre le corps (1) et l'appui (4) pour assurer l'étanchéité statique et comprenant en outre une partie (15) courbe qui peut se déplacer entre le corps (1) et l'appui (4) pour assurer une étanchéité dynamique, la partie courbe présentant une variation de son rayon de courbure tout en retenant une même direction de courbure, la partie courbe comprenant un premier arc (R1) ayant un rayon constant, **caractérisé en ce que** la partie courbe comprenant un deuxième arc (R2) ayant un rayon constant et un troisième arc (R3) ayant un rayon constant et sur le premier arc (R1) est placé un premier point de contact d'étanchéité dynamique et il y a aussi sur le premier arc un deuxième point de contact d'étanchéité dynamique assurant l'étanchéité quand le joint d'étanchéité est monté en direction opposée.

2. Dispositif de robinetterie selon la revendication 1, **caractérisé en ce que** la partie courbe (15) et le talon (16) du joint d'étanchéité en métal sont reliés par un segment droit (20) faisant un angle de moins de 135 degrés avec le talon (16).

## Patentansprüche

1. Armaturenvorrichtung. welche einen Körper (1), eine am Köper (1) befestigte Abstützung (4). ein Dichtelement (17) und einen Dichtring (14) aus Metall für die Sicherstellung der Dichtheit stromauf- und stromabwärts zwischen dem Körper (1) und dem Dichtelement (17) enthält,
wobei der Dichtring (14) aus Metall einen Steg (16) besitzt, der zwischen dem Körper (1) und der Abstützung (4) eingespannt ist. um eine statische Dichtheit sicherzustellen und der obendrein ein gekrümmtes Teil (15) enthält, das sich zwischen dem Körper (1) und der Abstützung (4) verlagern kann, um eine dynamische Dichtheit sicherzustellen,
wobei das gekrümmte Teil eine Änderung seines Krümmungsradius aufweist, wobei die gleiche Krümmungsrichtung beibehalten wird.
wobei das gekrümmte Teil einen ersten Bogen (R1) mit konstantem Radius hat, **dadurch gekennzeichnet, dass**
das gekrümmte Teil einen zweiten Bogen (R2) mit konstantem Radius und einen dritten Bogen (R3) mit konstantem Radius hat, und dass auf dem ersten Bogen (R1) ein erster Kontaktpunkt der dynamischen Dichtheit angeordnet ist und dass es auf dem ersten Bogen auch einen zweiten Kontaktpunkt der dynamischen Dichtheit gibt. der die Dichtheit sicherstellt, wenn der Dichtring (14) in entgegengesetzter Richtung montiert ist.

2. Armaturenvorrichtung nach Anspruch 1, **dadurch gekennzeichnet, dass** das gekrümmte Teil (15) und der Steg (16) des Dichtrings (14) aus Metall durch ein gerades Segment (20) verbunden sind, das mit dem Steg (16) einen Winkel von mindestens 135° bildet.

## Claims

1. A valve device comprising a body (1), a support (4), a sealing member (17) and a metal gasket for ensuring up-/downstream sealing between the body (1) and the sealing member (17), the gasket having a section comprising a heel (16) clamped between the body (1) and the support (4) for ensuring static sealing and a curved part (15) for ensuring dynamic sealing, wherein the curved part exhibits a variation in the radius of curvature while retaining a single direction of curvature, wherein the curved part comprises a first arc (R1) with a constant radius, **characterised in that** the curved part has a second arc (R2) with a constant radius and a third arc (R3) with a constant radius and, on the first arc (R1), there is positioned a first point of contact of dynamic sealing and there is also on the first arc a second contact of dynamic sealing of the gasket mounted in the reverse direction.

2. The valve device according to claim 1, **characterised in** the curved part (15) and the heel (16) of the metal gasket are connected by a straight segment (20) forming an angle of less than 135 degrees with the heel (16).
